# EUROPÄISCHE PATENTANMELDUNG

(11) **EP 2 213 919 A1**
(43) Veröffentlichungstag der Anmeldung: **04.08.2010**
(21) Anmeldenummer: 10152500.4
(22) Anmeldetag: 03.02.2010
(51) Int. Cl.: F16K 31/00

(54) **Ventil**

(30) Priorität: 03.02.2009 DE 102009007317
(71) Anmelder: Continental Automotive GmbH, 30165 Hannover (DE)
(72) Erfinder: Bonanno, Rosario, 65812 Bad Soden (DE)

(57) **Zusammenfassung**

Die Erfindung bezieht sich auf ein Ventil mit einem Ventilkörper, in dem ein Ventildurchlass 5 ausgebildet ist, der an einer Durchlassmündung 13 aus dem Ventilkörper nach außen führt. Über die Durchlassmündung 13 erstreckt sich eine deformierbare Membran, die zumindest an einem Teil ihres umlaufenden Randbereichs ortfest angeordnet ist und abhängig von einer Spannung zwischen einer auf dem die Durchlassmündung 13 umschließenden Mündungsbereich 14 aufliegenden, den Ventildurchlass verschließenden Schließposition und einer von dem Mündungsbereich 14 abgehobenen, den Ventildurchgang 5 öffnenden Offenposition verformbar ist. Auf der Membran 6 ist ein durch Spannungsbeaufschlagung verformbares Piezoelement fest angeordnet.

## Beschreibung

Die Erfindung bezieht sich auf ein Ventil mit einem Ventilkörper, in dem ein Ventildurchlass ausgebildet ist, der an einer Durchlassmündung aus dem Ventilkörper nach außen führt, mit einer sich über die Durchlassmündung erstreckenden, deformierbaren Membran, die zumindest an einem Teil ihres umlaufenden Randbereichs ortsfest angeordnet ist und abhängig von einer Spannung zwischen einer auf dem die Durchlassmündung umschießenden Mündungsbereich aufliegenden, den Ventildurchlass verschließenden Schließposition und einer von dem Mündungsbereich abgehobenen, den Ventildurchgang öffnenden Offenposition verformbar ist.

Bei einem derartigen Ventil ist es bekannt die Membran als geschlossene Trennmembran auszubilden, die mit einer Beschichtung aus einem elektroaktiven Polymermaterial versehen ist.

In einem Abstand zur Membran auf deren dem Ventildurchlass abgewandten Seite ist eine Gegenelektrode angeordnet und der Zwischenraum zwischen Membran und Gegenelektrode mit einem Treiberelektrolyt ausgefüllt.

Zwischen der Membran und der Gegenelektrode ist eine Spannung anlegbar, durch die die Membran aus ihrer den Ventildurchlass schließenden Schließposition in eine von dem Mündungsbereich des Ventildurchlasses abgehobenen Offenposition verformbar ist.

Dieses Ventil besitzt einen aufwendigen Aufbau mit einem hohen Bauraumerfordernis.

Aufgabe der Erfindung ist es daher ein Ventil der eingangs genannten Art zu schaffen, das einen Aufbau mit wenigen einfachen Bauteilen und einem geringen Bauraumerfordernis aufweist.

Diese Aufgabe wird erfindungsgemäß dadurch gelöst, dass auf der Membran ein durch Spannungsbeaufschlagung verformbares Piezoelement fest angeordnet ist.

Durch die Spannungsbeaufschlagung des Piezoelements kommt es zu einer Ausdehnung des Piezoelements in Erstreckungsrichtung der Ebene der Membran, wobei gleichzeitig auch die Membran in ihrem fest mit dem Piezoelement verbundenen Bereich gedehnt wird. Dies führt in dem das Piezoelement umgebenden Bereich der Membran zu einem Verbiegen und somit zu einem Aufwölben der Membran, die dadurch von dem Mündungsbereich des Ventildurchlasses abhebt und diesen öffnet.

Vorzugsweise ist dabei das Piezoelement ein flächiger, piezoelektrischer Flächenwandler.

Es versteht sich, dass das Piezoelement in kinematischer Umkehrung durch die Spannungsbeaufschlagung auch kontraktierbar sein kann, so dass durch die Spannungsbeaufschlagung des Piezoelements ein Umschalten von einer Offenposition in eine Schließposition erfolgt.

Ist das Piezoelement auf der dem Ventildurchlass abgewandeten Seite der Membran angeordnet, so stört das Piezoelement nicht bei einer dichten Auflage der Membran auf dem Mündungsbereich des Ventildurchlasses.

Eine zum Ventildurchlass gleichmäßige Aufwölbung der Membran wird dadurch erreicht, dass das Piezoelement symmetrisch zum Ventildurchlass angeordnet ist.

Zu einer gleichmäßig kreisförmigen Aufwölbung führt es weiterhin, wenn das Piezoelement eine Kreisscheibenform besitzt.

Es ist aber auch möglich, dass das Piezoelement ringförmig ausgebildet ist.

Vorzugsweise weist das Piezoelement einen Durchmesser auf, der annähernd dem Durchmesser des Ventildurchlasses an der Durchlassmündung entspricht, so dass ein Aufwölben nur in der Region des Mündungsbereichs erfolgt.

Die Membran kann eine metallische Membran sein.

Besonders kostengünstig kann aber auch die Membran eine Kunststoffmembran sein.

Zur festen Verbindung des Piezoelements mit der Membran kann das Piezoelement stoffschlüssig z.B. durch Schweißen mit der Membran verbunden sein.

Eine einfach herstellbare Verbindung besteht darin, dass das Piezoelement durch eine Klebeverbindung mit der Membran verbunden ist.

Eine Ausbildungsmöglichkeit der Membran besteht darin, dass die Membran ein sich über die Durchlassmündung erstreckender, mit seinen beiden Enden ortsfest angeordneter Membranstreifen ist.

Vorzugsweise weist aber die Membran einen kreisartigen Zentralbereich auf, durch den die Durchlassmündung verschließbar ist und von dem aus sich mehrere Arme wegerstrecken, die mit ihren dem Zentralbereich abgewandten Enden ortsfest angeordnet sind oder dass die Membran kreisförmig ausgebildet ist, wobei die Membran einen kreisartigen Zentralbereich aufweisen kann, durch den die Membran verschließbar ist, wobei in dem den Zentralbereich umschließenden Ringbereich der Membran gleichmäßig verteilt mehrere durchgehende Ausnehmungen ausgebildet sind.

Diese Ausbildungen führen zu einer hohen Gleichmäßigkeit der Aufwölbung und auch zu einem sicheren Verschließen des Ventildurchlasses in der Schließposition der Membran.

Das Piezoelement kann zum Öffnen des Ventildurchgangs aus einem nichtspannungsbeaufschlagten Zustand mit einer positiven Spannung beaufschlagbar sein.

Zu einem besonders sicheren Verschließen des Ventildurchgangs in der Schließposition der Membran führt es, wenn das Piezoelement zum Öffnen aus einem mit negativer Spannung beaufschlagten Zustand mit einer positiven Spannung beaufschlagbar ist, da dann die Membran bei negativer Spannung zur Auflage auf den Mündungsbereich gewölbt wird.

Ein Ausführungsbeispiel der Erfindung ist in der Zeichnung dargestellt und wird im Folgenden näher beschrieben. Es zeigen
- Figur 1: einen perspektivischen Querschnitt eines Ventils
- Figur 2: eine Draufsicht des Ventils nach Figur 1
- Figur 3: einen Querschnitt des Ventils nach Figur 1 entlang der Linie I - I in Figur 2 in geöffnetem Zustand
- Figur 4: einen Querschnitt des Ventils nach Figur 1 entlang Linie I - I in Figur 2 in geschlossenem Zustand
- Figur 5: einen Querschnitt des Ventils nach Figur 1 entlang der Linie II - II in Figur 2 in geschlossenem Zustand
- Figur 6: einen Querschnitt des Ventils nach Figur 1 entlang der Linie I - I in Figur 2 in geöffnetem Zustand
- Figur 7: einen Querschnitt des Ventils nach Figur 1 entlang der Linie II - II in Figur 2 in geöffnetem Zustand.

Das in den Figuren dargestellte Ventil ist in einem Rohr 1 angeordnet, dessen Einlassöffnung 2 ein Fluid, insbesondere ein Gas zugeführt und von dessen Auslassöffnung 3 das Fluid abgeführt wird.

In dem Rohr 1 ist eine einen Ventilkörper bildende Trennwand 4 angeordnet, die koaxial zur Längsachse des Rohres 1 einen kreisförmigen Ventildurchlass 5 aufweist.

Auslassöffnungsseitig ist an der Trennwand 4 anliegend eine kreisförmige Membran 6 angeordnet, die mit ihrem radial umlaufenden Rand 7 fest mit der Innenwand des Rohres 1 verbunden ist.

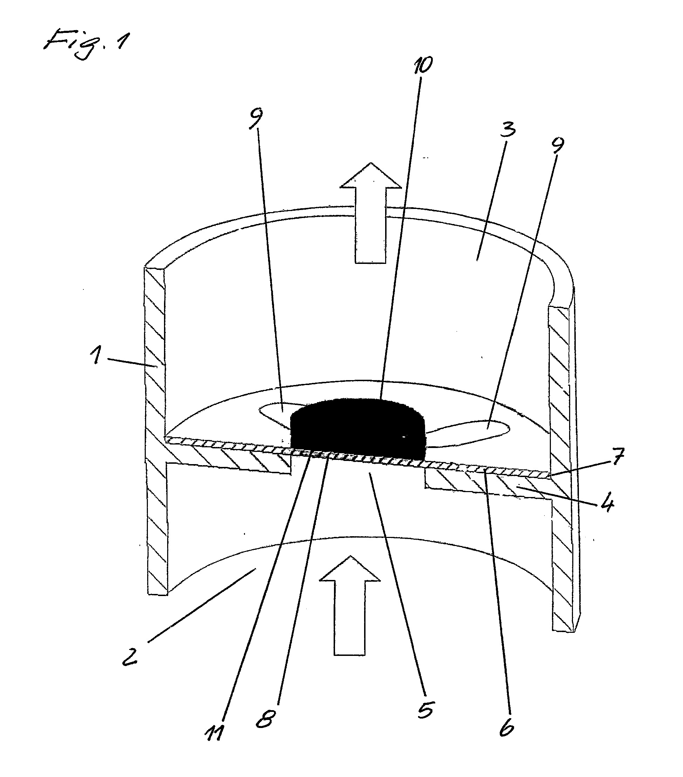

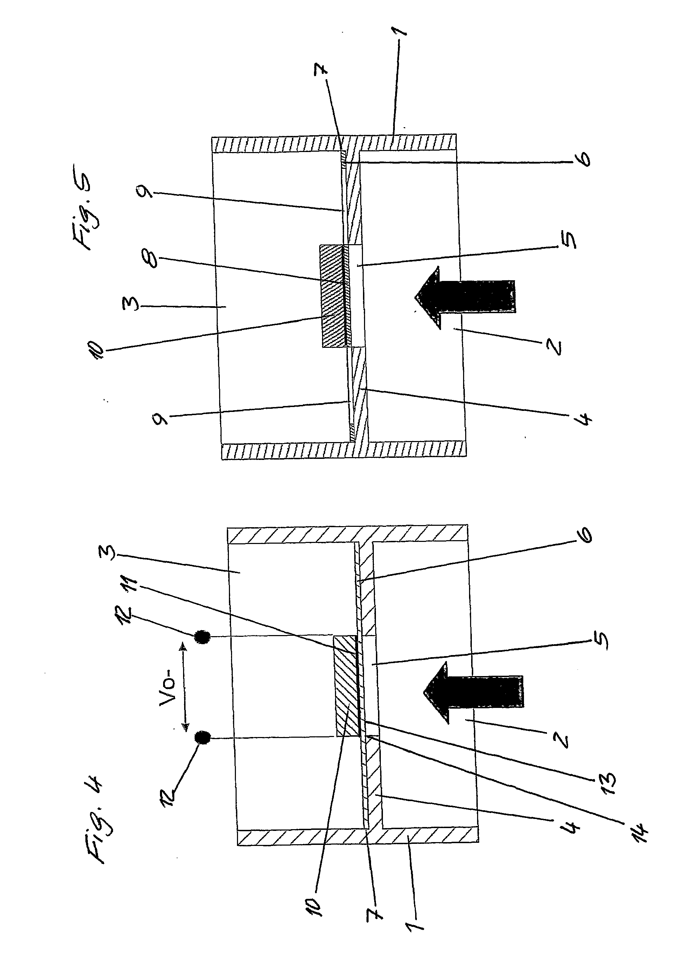

Die Membran 6 besitzt einen kreisförmigen Zentralbereich 8, dessen Durchmesser größer ist als der Durchmesser des Ventildurchlasses 5 und durch den in der in den Figuren 1, 4 und 5 dargestellten Schließposition der Ventildurchgang 5 abgedeckt und verschlossen ist.

Radial außerhalb des Zentralbereichs 8 erstrecken sich sternartig vier durchgehende langlochartige Ausnehmungen 9 radial nach außen.

Auslassöffnungsseitig ist koaxial zum Ventildurchlass 5 ein aus einer Piezokeramik bestehender flächiger, piezoelektrischer Flächenwandler 10 kreisförmigen Querschnitts mit seiner einen Kreisfläche mittels eines Klebers 11 auf dem Zentralbereich 8 der Membran 6 aufgeklebt.

Der Durchmesser des piezoelektrischen Flächenwandlers 10 entspricht annähernd dem Durchmesser des Ventildurchlasses 5.

Über zwei Anschlüsse 12 ist der piezoelektrische Flächenwandler 10 umschaltbar mit einer positiven und einer negativen Spannung beaufschlagbar.

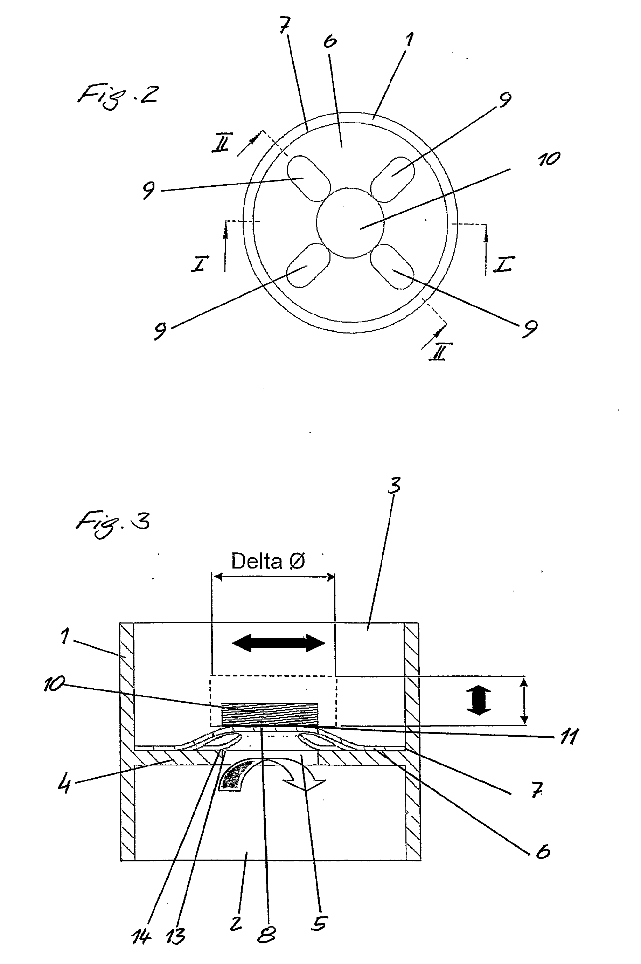

Durch die Spannungsbeaufschlagung kommt es zu einer Volumenvergrößerung und somit auch zu einer mechanischen Dehnung und Durchmesservergrößerung des piezoelektrischen Flächenwandlers 10 (siehe Figur 3).

Durch die Verbindung des piezoelektrischen Flächenwandlers 10 mittels des Klebers 11 mit dem Zentralbereich 8 der Membran 6 wird aufgrund der Durchmesservergrößerung des piezoelektrischen Flächenwandlers 10 eine mechanische Spannung auf der Membran 6 erzeugt, die zu einem aufwölbenden Verbiegen der Membran 6 in ihrem den piezoelektrischen Flächenwandler 10 umschließenden Bereich führt.

In der in den Figuren 1, 4 und 5 dargestellten Schließposition ist der piezoelektrische Flächenwandler 10 mit einer negativen Spannung beaufschlagt, was dazu führt, dass die Membran 6 mit ihrem Zentralbereich 8 zum Ventildurchlass 5 gewölbt und dabei der Zentralbereich 8 gegen den die Durchlassmündung 13 des Ventildurchlasses 5 umschließenden Mündungsbereich 14 an der Trennwand 4 gedrückt wird.

Dies führt zu einem besonders gut abdichtenden Verschließen des Ventildurchlasses 5 und somit zu keiner oder nur geringer Leckage auch bei einer Druckbeaufschlagung durch das einlass-öffnungsseitige Fluid.

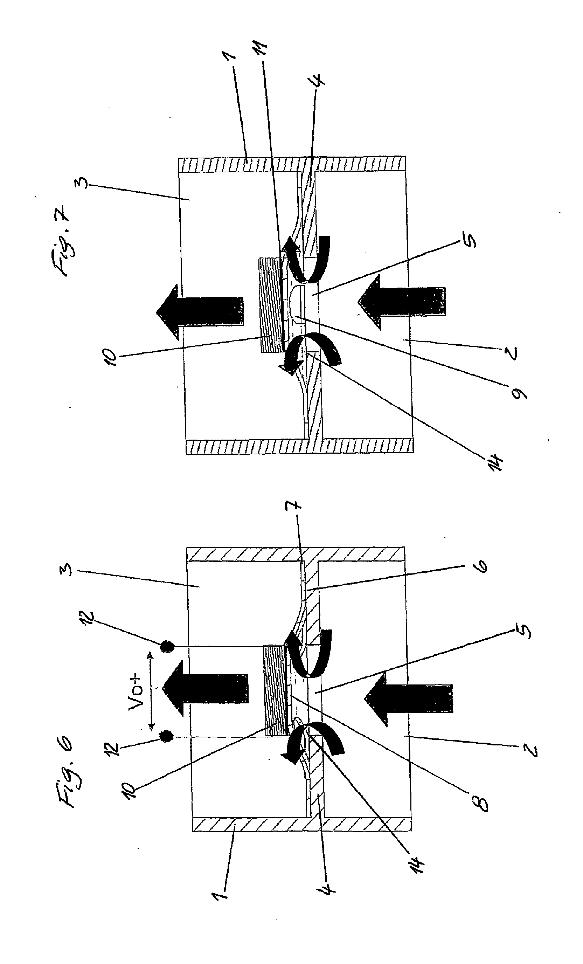

Bei der in den Figuren 3, 6 und 7 dargestellten Offenposition ist der piezoelektrische Flächenwandler 10 mit einer positiven Spannung beaufschlagt.

Dies führt dazu, dass die Membran 6 mit ihrem Zentralbereich 8 vom Ventildurchlass 5 weggewölbt wird, so dass der Zentralbereich 8 von dem Mündungsbereich 14 abhebt und den Ventildurchlass 5 öffnet.

Nun kann Fluid von der Einlassöffnung 2 durch den Ventildurchlass 5 und die Ausnehmungen 9 zur Auslassöffnung 3 strömen.

## Patentansprüche

1. Ventil mit einem Ventilkörper, in dem ein Ventildurchlass ausgebildet ist, der an einer Durchlassmündung aus dem Ventilkörper nach außen führt, mit einer sich über die Durchlassmündung erstreckenden, deformierbaren Membran, die zumindest an einem Teil ihres umlaufenden Randbereichs ortsfest angeordnet ist und abhängig von einer Spannung zwischen einer auf dem die Durchlassmündung umschießenden Mündungsbereich aufliegenden, den Ventildurchlass verschließenden Schließposition und einer von dem Mündungsbereich abgehobenen, den Ventildurchgang öffnenden Offenposition verformbar ist, **dadurch gekennzeichnet, dass** auf der Membran (6) ein durch Spannungsbeaufschlagung verformbares Piezoelement fest angeordnet ist.

2. Ventil nach Anspruch 1, **dadurch gekennzeichnet, dass** das Piezoelement ein flächiger, piezoelektrischer Flächenwandler (10) ist.

3. Ventil nach einem der vorhergehenden Ansprüche, **dadurch gekennzeichnet, dass** das Piezoelement auf der dem Ventildurchlass (5) abgewandeten Seite der Membran (6) angeordnet ist.

4. Ventil nach einem der vorhergehenden Ansprüche, **dadurch gekennzeichnet, dass** das Piezoelement symmetrisch zum Ventildurchlass (5) angeordnet ist.

5. Ventil nach einem der vorhergehenden Ansprüche, **dadurch gekennzeichnet, dass** das Piezoelement eine Kreisscheibenform besitzt.

6. Ventil nach Anspruch 5, **dadurch gekennzeichnet, dass** das Piezoelement einen Durchmesser aufweist, der annähernd dem Durchmesser des Ventildurchlasses (5) an der Durchlassmündung (13) entspricht.

7. Ventil nach einem der vorhergehenden Ansprüche, **dadurch gekennzeichnet, dass** die Membran (6) eine metallische Membran ist.

8. Ventil nach einem der Ansprüche 1 bis 6, **dadurch gekennzeichnet, dass** die Membran eine Kunststoffmembran ist.

9. Ventil nach einem der vorhergehenden Ansprüche, **dadurch gekennzeichnet, dass** das Piezoelement stoffschlüssig mit der Membran verbunden ist.

10. Ventil nach einem der Ansprüche 1 bis 8, **dadurch gekennzeichnet, dass** das Piezoelement durch eine Klebeverbindung mit der Membran (6) verbunden ist.

11. Ventil nach einem der vorhergehenden Ansprüche, **dadurch gekennzeichnet, dass** die Membran ein sich über die Durchlassmündung erstreckender, mit seinen beiden Enden ortsfest angeordneter Membranstreifen ist.

12. Ventil nach einem der Ansprüche 1 bis 10, **dadurch gekennzeichnet, dass** die Membran einen kreisartigen Zentralbereich aufweist, durch den die Durchlassmündung verschließbar ist und von dem aus sich mehrere Arme wegerstrecken, die mit ihren dem Zentralbereich abgewandten Enden ortsfest angeordnet sind.

13. Ventil nach einem der Ansprüche 1 bis 10, **dadurch gekennzeichnet, dass** die Membran (6) kreisförmig ausgebildet ist.

14. Ventil nach Anspruch 13, **dadurch gekennzeichnet, dass** die Membran (6) einen kreisartigen Zentralbereich (8) aufweist, durch den die Membran (6) verschließbar ist, wobei in dem den Zentralbereich (8) umschließenden Ringbereich der Membran (6) gleichmäßig verteilt mehrere durchgehende Ausnehmungen (9) ausgebildet sind.

15. Ventil nach einem der vorhergehenden Ansprüche, **dadurch gekennzeichnet, dass** das Piezoelement zum Öffnen des Ventildurchgangs aus einem nichtspannungsbeaufschlagten Zustand mit einer positiven Spannung beaufschlagbar ist.

16. Ventil nach einem der Ansprüche 1 bis 14, **dadurch gekennzeichnet, dass** das Piezoelement zum Öffnen aus einem mit negativer Spannung beaufschlagten Zustand mit einer positiven Spannung beaufschlagbar ist.
